(19) Europäisches Patentamt / European Patent Office / Office européen des brevets

(11) **EP 1 887 340 A1**

(12) **EUROPÄISCHE PATENTANMELDUNG**

(43) Veröffentlichungstag:
**13.02.2008 Patentblatt 2008/07**

(51) Int Cl.:
***G01N 1/28*** (2006.01)

(21) Anmeldenummer: **06016816.8**

(22) Anmeldetag: **11.08.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **Molecular Machines & Industries AG 8152 Glattbrugg (CH)**

(72) Erfinder: **Niehren, Stefan, Dr. 85250 Altomünster (DE)**

(74) Vertreter: **HOFFMANN EITLE Patent- und Rechtsanwälte Arabellastrasse 4 81925 München (DE)**

(54) **Verfahren und Vorrichtung zum Schneiden und Sammeln von Dissektaten**

(57) Ein Verfahren zum Schneiden und Sammeln von Dissektaten, umfasst die folgenden Schritte: Aufbringen einer bevorzugt biologischen Probe auf einen Träger eines Laser-Dissektions-Mikroskops, der in seiner Ebene verfahrbar ist, Absenken einer auf der optischen Achse zentrierten Sammelhaftvorrichtung auf die Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist, Schneiden eines oder mehrerer Dissektate aus der Probe, wobei, wenn das nächste zu schneidende Dissektat sich außerhalb eines vorbestimmten Sammelradius der Sammelhaftvorrichtung befindet, die folgenden Schritte durchgeführt werden: Anheben der Sammelhaftvorrichtung, Verfahren des Trägers an eine bestimmte Position relativ zur optischen Achse des Mikroskops, um die Mitte des nächsten zu schneidenden Dissektats von der optischen Achse des Mikroskops zu dezentrieren, Absenken der Sammelhaftvorrichtung auf die Probe, und Schneiden eines oder mehrerer nächster Dissektate, wobei nach jedem Anheben die vorbestimmte Position von sämtlichen zuvor bestimmten Positionen um mindestens einen vorbestimmten Abstand entfernt ist.

Fig. 4

EP 1 887 340 A1

**Beschreibung**

Gebiet der Erfindung

Die vorliegende Erfindung betrifft ein Verfahren zum Schneiden und Sammeln von Dissektaten aus Proben, sowie ein Laser-Dissektions-Mikroskop, das zum Einsatz dieses Verfahrens geeignet ist.

Stand der Technik

Bei der Laser-Mikrodissektion von insbesondere biologischen oder medizinischen Proben, wie zum Beispiel Gewebebiopsie-Proben, wird eine im allgemeinen 5-10 μm dicke Probe auf einen Objektträger eines Laser-Dissektions-Mikroskops gelegt und dann mithilfe eines fein fokussierten Laserstrahls einer IR-Laserdiode (z.B. einer AlGaAs-Laserdiode) Dissektate aus der Probe geschnitten. Hierzu wird ein transparenter thermoplastischer Übertragungsfilm über die Probe gelegt, der selektiv im infraroten Emissionsspektrum der Laserdiode absorbiert. Der Film wird vom Laserstrahl an wohl definierten Stellen aufgeschmolzen und haftet auf dem gewünschten zu schneidenden Teil der Probe (Dissektat) an. Das Dissektat kann beispielsweise aus einzelnen Zellen oder einer Gruppe von Zellen bestehen, die zur weiteren Analyse aus der Probe extrahiert werden müssen. In anderen Worten müssen die Dissektate, deren Größenordnung etwa 1-10 μm beträgt, nach dem Schneiden geeignet gesammelt werden. Hierbei ergeben sich insbesondere dann Probleme, wenn eine Vielzahl von Dissektaten geschnitten und gesammelt werden muss. Außerdem kommt es hierbei zu einer thermischen Beeinflussung der Probe, da der zum Schneiden eingesetzte IR-Laserstrahl Wärme auf die Probe überträgt und dadurch die Probe, in diesem Beispiel Zellen, beschädigen kann.
Im Stand der Technik sind verschiedene Verfahren bekannt, um die geschnittenen Dissektate aufzusammeln. So beschreibt zum Beispiel die DE 201 00 866 U eine Trägervorrichtung, die den Übertragungsfilm mit der Probe freigespannt in einem Rahmen trägt und aus der nach dem Schneiden mit dem Laserstrahl der Film mit dem Dissektat nach unten in einen Auffangbehälter herabfällt. Dieses Verfahren hat jedoch die folgenden Nachteile. Zum Einen ist dies die fehlende Referenzierbarkeit der Dissektate, da alle geschnitten Dissektate auf unkontrollierte Weise in einen Behälter fallen und somit nicht mehr ihren ursprünglichen Positionen zugeordnet werden können. Des weiteren können durch den lediglich schwerkraftbedingten freien Fall insbesondere kleine Dissektate für die Analyse verloren gehen, wenn sie aufgrund ihrer elektrostatischen Wechselwirkungen an Teilen des Mikroskops oder der Behälterwandung hängen bleiben.
Die US 5,998,129 beschreibt ein Laser-Mikrodissektions-Verfahren, in dem aus einer auf einem ebenen Objektträger aufgebrachten Gewebeprobe ein gewünschter Bereich z.B. Zellorganellen oder eine einzelne Zelle per Laserstrahl vom umgebenden Gewebe ausgeschnitten wird. Die sich noch auf dem Objektträger befindende isolierte Zelle wird mit einem zusätzlichen Laserimpuls entlang des Laserstrahl katapultiert und in einem Reaktionsbehälter aufgefangen. Durch den Impulsübertrag vom Laserstrahl fliegen die Dissektate auch hier auf unkontrollierte Weise in den Reaktionsbehälter und können nicht mehr referenziert werden. Große Dissektate lassen sich zudem nicht katapultieren und müssen zuvor zerlegt werden.
Ein weiteres bekanntes Verfahren umfasst die Verwendung einer Sammelhaftvorrichtung, eines so genannten Caps. Zunächst werden mehrere Dissektate aus der Probe geschnitten, dann wird das Cap auf die Probe abgesenkt und die Dissektate an dem Cap angehaftet. Das Cap mit den angehafteten Dissektaten wird im Mikroskop angehoben und herausgenommen. Zwar kann bei diesem Verfahren das Cap mehrere Dissektate aufnehmen und damit schneller arbeiten, jedoch besteht aufgrund der unterschiedlichen Größe und Form der Dissektate, der begrenzten Aufnahmefläche und Haftfähigkeit des Caps und der eventuellen Verkippung beim Anhaften, das Problem, dass die Cap-Fläche nur unzureichend ausgenutzt, was zu einer unvermeidlichen Verschwendung der teuren Caps führt. Werden andererseits mehrere Dissektate übereinander gestapelt, besteht die Gefahr, dass die Dissektate unkontrolliert herabfallen und verloren gehen. Hierdurch wird die Probenmenge auf dem Cap stark limitiert, was von Nachteil ist, da bei einigen Applikationen dann die Dissektate für die Analyse nicht ausreichen.

Darstellung der Erfindung

Es ist somit eine Aufgabe der vorliegenden Erfindung, ein Verfahren sowie eine Vorrichtung zu entwickeln, welche die genannten Probleme löst, und somit ein kontaminationsfreies, sicheres, effizientes und kostengünstigen Sammeln von Dissektaten unterschiedlicher Größen ermöglicht, ohne die Probe zu beschädigen oder ein kompliziertes Konzept oder einen komplizierten Aufbau zu haben. Diese Aufgabe wird mit dem Verfahren mit den Merkmalen des folgenden Anspruchs 1 sowie mit einer Vorrichtung mit den Merkmalen des Anspruchs 7 gelöst. Weitere vorteilhafte Ausführungsformen ergeben sich aus den Unteransprüchen.
Ein erfindungsgemäßes Verfahren zum Schneiden und Sammeln von Dissektaten umfasst die folgenden Schritte: Aufbringen einer biologischen Probe auf einen Träger eines Laser-Dissektions-Mikroskops, der in seiner Ebene verfahrbar ist; Absenken einer auf der optischen Achse zentrierten Sammelhaftvorrichtung auf die biologische Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist; Schneiden eines oder mehrerer Dissektate aus der biologischen Probe, wobei, wenn das nächste zu schneidende Dissektat sich außerhalb eines vorbestimmten Sammelradius der Sammelhaftvorrichtung befindet, die folgenden Schritte durchgeführt werden: Anheben der Sammelhaftvorrichtung; Verfahren des Trägers an eine bestimmte Position relativ zur optischen Achse des Mikroskops, um die Mitte des nächsten zu schneidenden Dissektats von der optischen Achse des Mikroskops zu dezentrieren; Absenken der Sammelhaftvorrichtung auf die biologische Probe; und Schneiden eines oder mehrerer nächster Dissektate, wobei nach jedem Anheben die vorbestimmte Position von sämtlichen zuvor bestimmten Positionen um mindestens einen vorbestimmten Abstand entfernt ist.

Alternativ umfasst das erfindungsgemäße Verfahren zum Schneiden und Sammeln von Dissektaten, die folgenden Schritte: Aufbringen einer biologischen Probe auf einen Träger eines Laser-Dissektions-Mikroskops, der in seiner Ebene verfahrbar ist, Schneiden der Dissektate aus der biologischen Probe, und Sammeln der Dissektate durch Absenken einer auf der optischen Achse zentrierten Sammelhaftvorrichtung auf die biologische Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist, wobei, wenn ein nächstes zu sammelndes Dissektat sich außerhalb eines vorbestimmten Sammelradius der Sammelhaftvorrichtung befindet, die folgenden Schritte durchgeführt werden: Anheben der Sammelhaftvorrichtung, Verfahren des Trägers an eine bestimmte Position relativ zur optischen Achse des Mikroskops, um die Mitte des nächsten zu sammelnden Dissektats von der optischen Achse des Mikroskops zu dezentrieren, Absenken der Sammelhaftvorrichtung auf die biologische Probe, und Anhaften eines oder mehrerer nächster Dissektate an die Sammelhaftvorrichtung, wobei nach jedem Anheben die vorbestimmte Position von sämtlichen zuvor bestimmten Positionen um mindestens einen vorbestimmten Abstand entfernt ist. '

Mit beiden Verfahren ist es möglich, die gesamte Haftfläche der Sammelhaftvorrichtung effizient zu nutzen, eine Dissektatstapelung zu vermeiden, und die Sammeleffizienz insgesamt zu erhöhen. Außerdem werden die oben genannten Nachteile des Stands der Technik, wie die thermische Beaufschlagung der Probe und das unkontrollierte Fliegen oder Fallen der Dissektate, mit den beiden Verfahren vermieden.

Bei den erfindungsgemäßen Verfahren ist es bevorzugt, dass der vorbestimmte Abstand durch die Größe der Dissektate definiert ist. Da die Dissektate zumeist verschiedene Größen besitzen, kann zum Beispiel der vorbestimmte Abstand durch die mittlere Größe der zu schneidenden Dissektate definiert werden. Ebenso kann die maximale Größe hierzu verwendet werden. Mit dem erfindungsgemäßen Verfahren können somit alle Probengrößen geschnitten werden.

In einer vorteilhaften Ausgestaltung der erfindungsgemäßen Verfahren liegen die Positionen nacheinander auf einem spiralförmigen Weg. Dies erleichtert eine eindeutige Identifizierung der Dissektate und erlaubt eine hohe Dissektatdichte auf der Sammelhaftvorrichtung.

Die Sammelhaftvorrichtung liegt bevorzugt im abgesenkten Zustand plan auf der biologischen Probe auf. Dies verbessert die Haftung des Dissektats an der Sammelhaftvorrichtung, sorgt für eine größere Haftfläche und ermöglicht somit eine größere Sammelkapazität.

Es ist bevorzugt, dass die Sammelhaftvorrichtung im abgesenkten Zustand mit einem kontrollierten Anpressdruck auf der biologischen Probe aufliegt. Dadurch kann die Sammelleistung erhöht werden, wobei gleichzeitig Beschädigungen der Probe bzw. der Dissektate vermieden werden. Des weiteren wird die Planarität der Probe nicht gestört, so dass die Probe in der Bildebene des Mikroskops und der Schneidebene des Lasers bleibt.

Ein erfindungsgemäßes Laser-Dissektations-Mikroskop zum Schneiden und Sammeln von Dissektaten umfasst einen Träger zur Aufnahme einer biologischen Probe, wobei der Träger in seiner Ebene frei verfahrbar ist, eine Sammelhaftvorrichtung, die auf die biologische Probe auf dem Träger absenkbar und davon anhebbar ist, die im abgesenkten Zustand frei mit dem Träger verfahrbar und von der optischen Achse des Mikroskops entkoppelt ist und im angehobenen Zustand relativ zur optischen Achse festgelegt ist.

Durch die freie Verfahrbarkeit im abgesenkten Zustand wird es dem Mikroskop ermöglicht, die Sammelhaftvorrichtung relativ zum Träger mit der Probe gezielt und kontrolliert zu positionieren und somit die Sammelhaftvorrichtung effizient auszunutzen.

Bevorzugt umfasst das erfindungsgemäße Laser-Dissektations-Mikroskop ferner einen Magneten zum Steuern des Anpressdrucks der Sammelhaftvorrichtung. Eine besonders feine Dosierung des Anpressdrucks kann auf diese Weise realisiert werden.

In einer besonders vorteilhaften Ausführungsform ist der Magnet frei dosierbar, so dass der relative Abstand der Sammelhaftvorrichtung zur Probe eingestellt werden kann. Die gesammelten Dissektate auf dem Cap können so zum Beispiel im Zuge der Prozesskontrolle bis knapp über die Probe abgesenkt werden und visuell ohne Anhaften an die Probe beobachtet werden.

Es ist vorteilhaft, wenn beim erfindungsgemäßen Laser-Dissektions-Mikroskop der Abstand zwischen Sammelhaftvorrichtung und Probe einstellbar ist. Somit ist es möglich, zum Beispiel zu Kontrollzwecken die Sammelhaftvorrichtung knapp über die Probe abzusenken, ohne diese jedoch zu berühren. Die Sammelhaftvorrichtung kann dann praktisch in Fokus mit dem Mikroskop visuell beobachtet werden, ohne dass ein Kontakt mit der Probe die Beobachtung beeinträchtigt.

Weiter ist bevorzugt, dass das Laser-Dissektions-Mikroskop mehrere Sammelhaftvorrichtungen oder ein oder mehrere Sammelhaftvorrichtungs-Arrays umfasst. Es können dadurch mehrere Gruppen von Dissektaten nacheinander abgearbeitet werden, ohne dass ein Benutzereingriff zum Wechseln der Sammelhaftvorrichtung die Dissektion unterbricht.

Kurze Beschreibung der Zeichnungen

Figur 1a zeigt eine Seitenansicht eines Laser-Dissektions-Mikroskops entsprechend einer Ausführungsform der Erfindung;

Figur 1b zeigt eine Vorderansicht des Mikroskops der Figur 1;

Figur 2a zeigt eine Teil-Schnittansicht von oben eines Caplift-Moduls des Mikroskops der Figur 1;

Figur 2b zeigt seitliche Teil-Schnittansicht des Caplift-Moduls der Figur 2a;

Figur 2c zeigt eine Teil-Schnittansicht von vorne des Caplift-Moduls der Figur 2a;

Figur 3 zeigt ein Flussdiagramm, das das eine Ausführungsform der erfindungsgemäßen Verfahrens darstellt; und

Figur 4 zeigt ein Schema eines Gitterrasters, mit dem der Cap zur Aufnahme der Dissektate der unterteilt wird.

Wege zur Ausführung der Erfindung

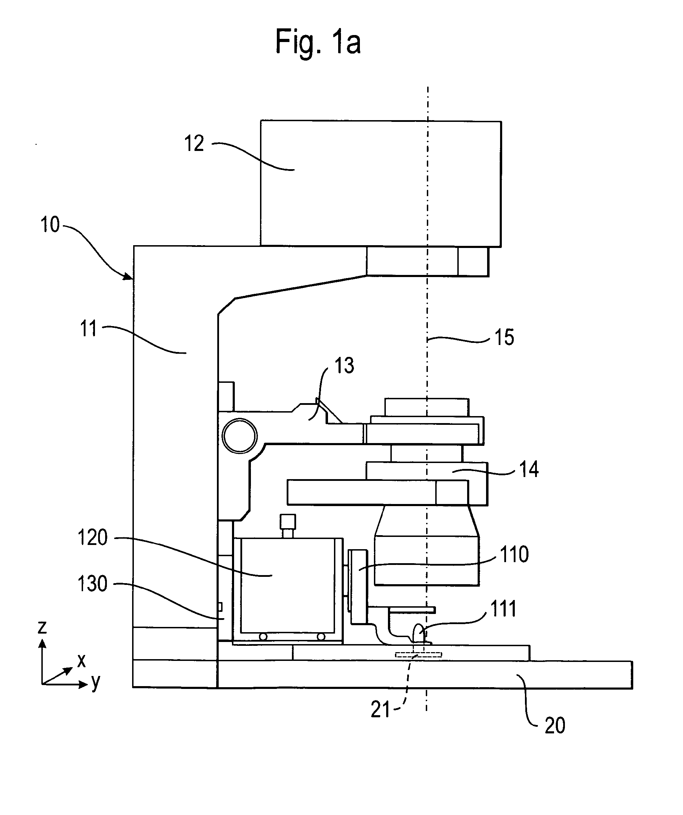

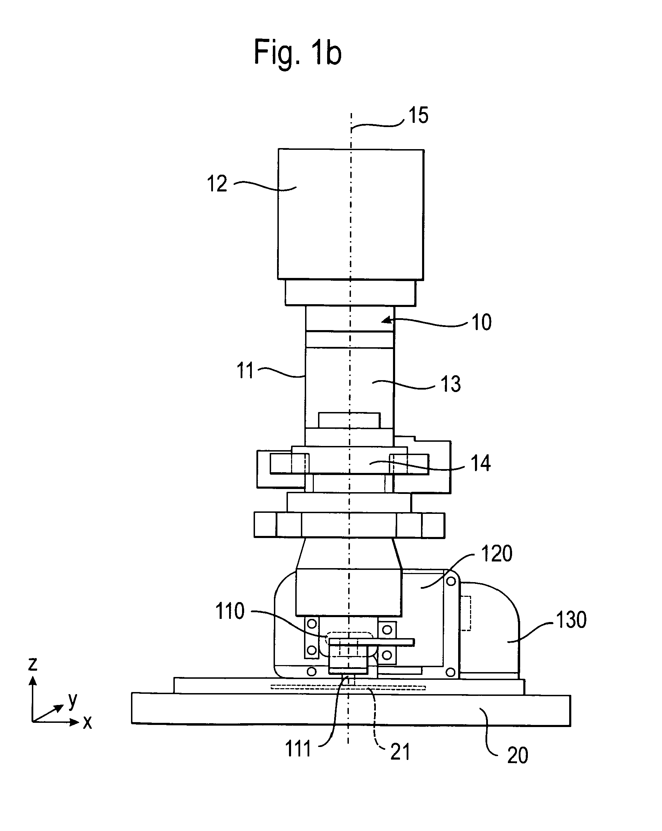

In Figur 1a und 1b ist ein Laser-Mikrodissektions-Mikroskop entsprechend einer Ausführungsform der vorliegenden Erfindung gezeigt. Es umfasst eine Mikroskop-Beleuchtungseinheit 10, die aus einem Beleuchtungsarm 11, einem Lampengehäuse 12 mit Filter und Lampe sowie einem am Beleuchtungsarm angebrachten Kondensorhalter 13 mit Kondensor 14 besteht. Im unteren Teil des Mikroskops befindet sich ein in der xy-Ebene verschiebbarer Tisch 20, auf dem der Objektträger 21 mit der Probe 22 befestigt ist. Die optische Achse des Mikroskops ist strichpunktiert gezeigt und mit der Bezugsziffer 15 bezeichnet.

Unter dem Kondensorhalter 13 befindet sich das Caplift-Modul, das als wesentliche Elemente den Caplift 120, den Caplift-Arm 110 und den eigentlichen Cap 111 (Sammelhaftvorrichtung) enthält. Der Caplift 120 ist über den Caplifthalter 130 am Beleuchtungsarm 11 des Mikroskops angebracht.

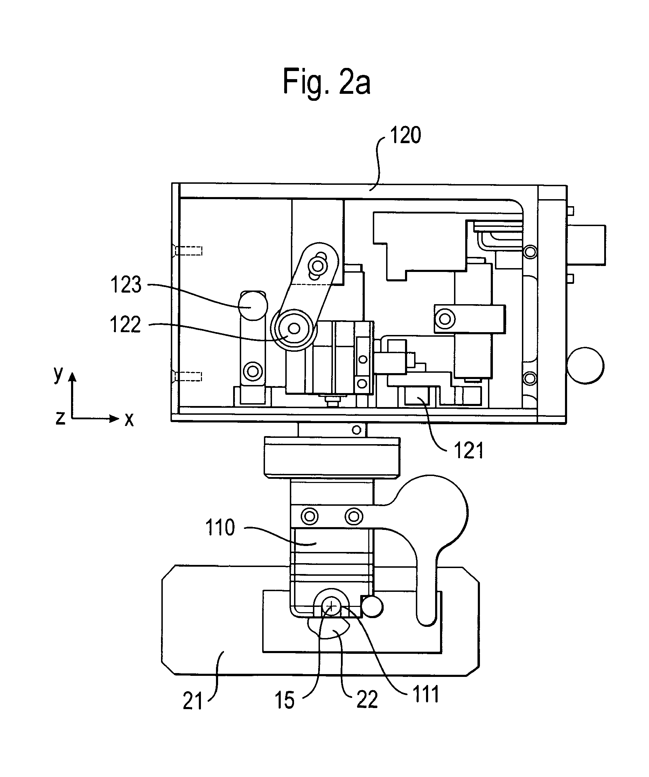

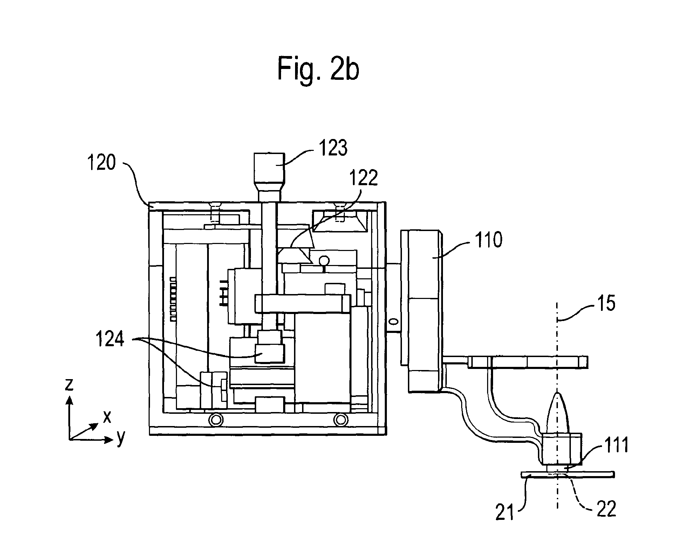

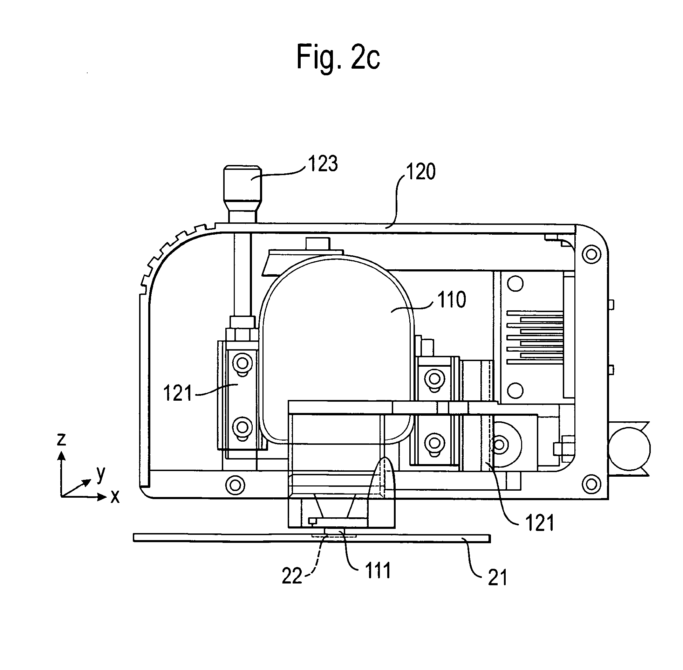

Die Figuren 2a, 2b und 2c zeigen im Detail den Aufbau des Caplift-Moduls. Im Inneren des Caplifts 120 befinden sich die Höhenverstellung 121, mit Hilfe derer der Caplift-Arm 110 in Bezug auf xy-Tisch 20 höhenverstellt werden kann. Die Bezugsziffer 122 bezeichnet den Einstellmechanismus zur Zentrierung des Caps auf die optische Achse 15 des Mikroskops und die Bezugsziffer 123 bezeichnet die Steuereinrichtung des Anpressdrucks des Caps auf die Probe, welche die Position der Magnete 124 einstellt.

Der Caplift-Arm 110 kann mindestens zwei unterschiedliche Positionen einnehmen, einerseits eine obere, angehobene Position und anderseits eine untere, abgesenkte Position, sowie eine oder mehrere Schwebepositionen, in denen das Cap die Probe nicht berührt. In der oberen Position ist der Caplift-Arm 110 relativ zur optischen Achse 15 des Mikroskops fixiert, während er in der unteren Position und in den Schwebepositionen von der optischen Achse entkoppelt ist. Der Caplift-Arm 110 ist in dieser Position in der x und y-Richtung frei beweglich. Dies ist notwendig damit der Caplift-Arm 110 mit dem Cap 111 beim Schneiden und Bewegen des xy-Tisches 20 ungestört mitfahren kann. Das einstellbare Freispiel (maximaler Verfahrweg) beträgt bis zu +/-10 mm. Innerhalb dieses Freispiels liegt der Cap 111 immer Plan auf der Probe 22 auf bzw. schwebt parallel über ihr. Wird das eingestellte Freispiel überschritten, kann eine Steuerung (nicht gezeigt) den Cap 111 automatisch anheben.

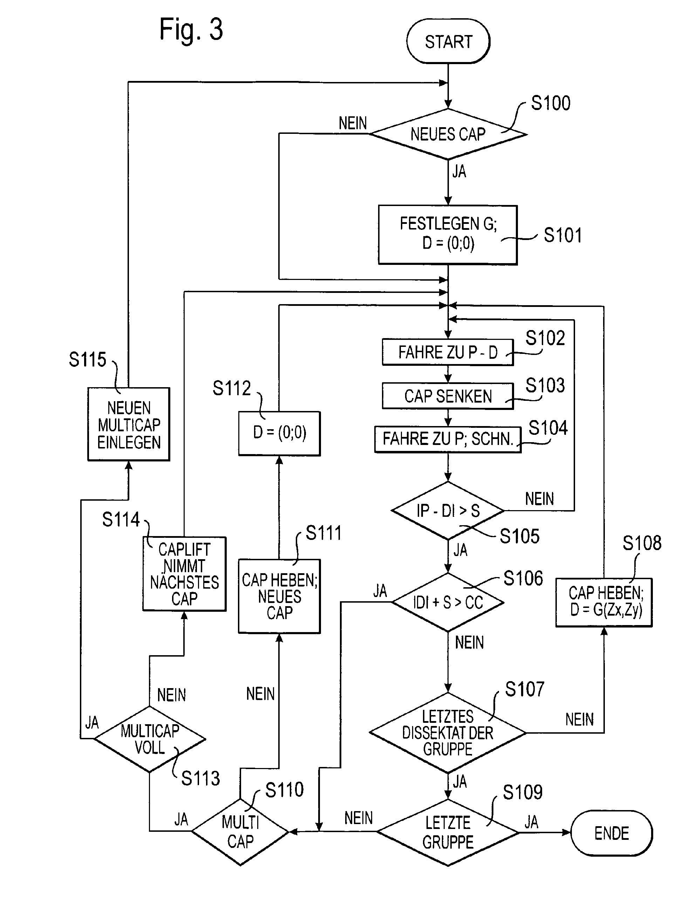

Im folgenden wird eine Ausführungsform des erfindungsgemäßen Verfahrens anhand des Flussdiagramms der Figur 3 dargestellt.

Zu Beginn des Verfahrens (S100) wird zunächst geprüft, ob ein neues, unbenutztes Cap verwendet wird, und wenn ja werden in die Steuerung die Mittenpositionen und Schnittlinien einer oder mehrerer Gruppen zu schneidender Dissektate eingegeben. Die Steuerung kennt außerdem weitere Parameter wie z.B. den Sammelradius $S$ des Caps. Innerhalb eines vom Benutzer definierten Sammelradius S werden alle Proben ohne Anheben des Caps geschnitten.

Befinden sich noch weitere zu schneidende Dissektate auf der Probe, sind jedoch außerhalb des Sammelradius S, muss der Caplift angehoben und neu positioniert werden.

Es wird nun ein virtuelles Gitter mit Gitterweite *G* dem Cap überlagert (S101). Die Gitterkonstante *G* richtet sich nach der mittleren Größe der zu schneidenden Objekte (Dissektate) in der jeweiligen Gruppe und wird festgelegt als ein vom Benutzer gewähltes Vielfaches *Q* der Summe aus mittleren Durchmesser $d_{ave}$ der in der Gruppe definierten Dissektate und der doppelten Varianz der Durchmesser, $\sigma_d$:

$$G = Q * (d_{ave} + 2\sigma_d).$$

Bei einem noch unbenutzten Cap, an dem noch keine Dissektate anhaften, wird der angehobene Cap 111 auf die optische Achse 15 des Mikroskops zentriert, d.h. man setzt die Distanz *D = (0;0)* und nutzt die Gitterzelle *(0,0).* In anderen Worten wird das erste Dissektate im Zentrum des Caps angehaftet. Der Objektträger wird nun entsprechend den Schnittlinien und Mittenpositionen auf die den Dissektaten entsprechenden Dissektatpositionen *P* gefahren (S102 mit *D = (0;0)).*

Befindet sich eine Position *P* jedoch außerhalb des Sammelradius S, so muss der Cap neu positioniert werden. In diesem Falle wird das (nächste) zu schneidende Objekt auf eine neue Gitterzellenposition *P-D* bewegt (S102). Die Mitte des Dissektats liegt nun nicht in der optischen Achse 15, sondern ist von ihr um eine Distanz *D = (Dx;Dy)* beabstandet. Der Abstand *D* (Gitterversatz) kann auf verschiedene Weisen bestimmt werden, von denen eine weiter unten dargestellt ist. Bedingung hierfür ist, dass das Dissektat nicht auf einen schon entnommenen Schnitt auf dem Cap 111 trifft, also dass die neue Position um die Gitterkonstante von der alten entfernt ist. Der Capversatz *D* wird hierbei entsprechend der Zellenindices *(Zx; Zy)* berechnet,

$$D = (G*Zx; G*Zy).$$

Der Cap 111 wird dann in die untere Position abgesenkt (S103). Jetzt erst wird das Zentrum des Dissektats durch Bewegen des xy-Tischs 20 in die optische Achse 15 (Laser) verfahren und die nächsten Objekte mit aufliegenden Cap geschnitten (S104). Damit wird der Cap genau um die kontrollierte Distanz *D* von der Mitte des Dissektats dezentriert.

Wenn das nächste zu schneidende Dissektat außerhalb des Sammelradius des Caps liegt, d.h. wenn |*P-D*| > *S* (S105), dann wird, falls das Cap noch nicht voll ist, |*D*| + *S* > *CC* (S106), und das letzte Dissektat der Gruppe noch nicht geschnitten wurde (S107), das Cap angehoben und die nächste Gitterzelle verwendet (S108). Der Parameter *CC* entspricht hierbei der Kapazität des Caps. Diese *Cap Capacity* ist ein Maß für die maximal nutzbare Fläche des Caps und wird bestimmt durch das Minimum des Freispiels *FR* des Caps und der nutzbaren Klebefläche *KF* des Caps *(CC = min(FR, KF)).* In anderen Worten, wenn der Cap um mehr als die nutzbare *Cap Capacity* verfahren werden muss, um den Gitterversatz zu realisieren, wird angenommen, dass das Cap voll ist (siehe S106). In diesem Fall muss das Cap angehoben werden und ein neues Cap am Caplift-Arm 110 angebracht werden (S111). Das neue Cap wird dann wieder in die optische Achse zentriert (S112).

In weiteren Ausgestaltungsmöglichkeiten der Erfindung, die ebenfalls im Diagramm der Figur 3 berücksichtigt sind, werden mehrere Gruppen von Dissektaten geschnitten. Hierbei können so genannte Multicapsysteme eingesetzt werden, die aus mehreren gleichzeitig auf dem Caplift-Arm 110 gehaltenen Caps bestehen. Ist das gerade im Einsatz befindliche Cap voll (S106), oder das letzte Dissektat einer Gruppe geschnitten (S107) und die letzte Gruppe noch nicht abgearbeitet (S109), so kann das vorhandene Multicapsystem (S110) für die nächste zu schneidende Gruppe ein neues Cap verwenden (5114). Auch hier wird geprüft, ob sämtliche Caps des Multicapsystems bereits voll sind (S113), und falls ja, wird aufgefordert, ein neues Multicapsystem einzulegen (S115).

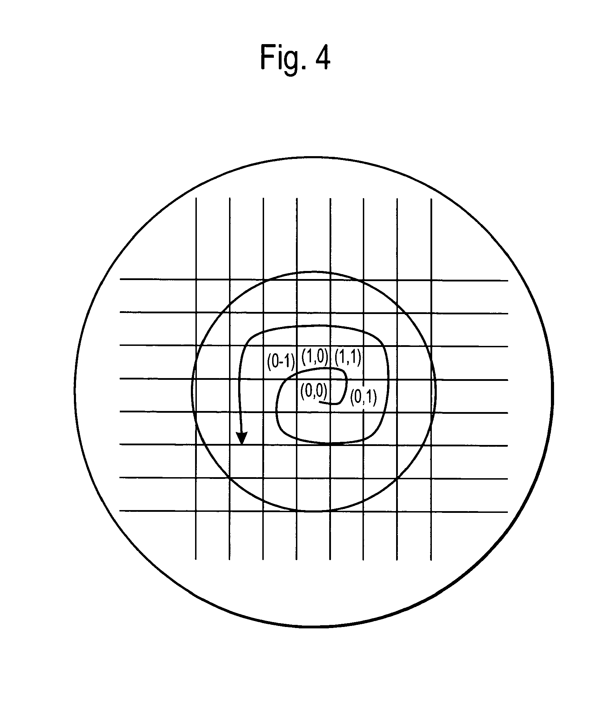

In der hier dargestellten Ausführungsform des Verfahrens werden die Positionen (Gitterzellen) entlang eines spiralförmigen Wegs vom Objektträger abgefahren. Dies ist beispielhaft in Figur 4 gezeigt. Hierbei berechnen sich die aktuellen Zellenindizes Z=(Zx,Zy) zu

$$N=0; \quad Z=(0,0)$$
$$Do \quad N=N+1$$

```
{
    erhöhe Zx um 1 bis Zx==N
    erhöhe Zy um 1 bis Zy==N
    verringere Zx um 1 bis Zx==-N
    verringere Zy um 1 bis Zy==-N
}
D = (G*Zx, G*Zy).
```

Der Fachmann wird zweifelsfrei weitere vorteilhafte Ausführungsformen anhand des hier dargestellten Beispiels erkennen können, die ebenso im Umfang dieser Erfindung liegen.

**Patentansprüche**

1.   Verfahren zum Schneiden und Sammeln von Dissektaten, mit den folgenden Schritten:

Aufbringen einer Probe auf einen Träger eines Laser-Dissektions-Mikroskops, der in seiner Ebene verfahrbar ist, Absenken einer auf der optischen Achse zentrierten Sammelhaftvorrichtung auf die Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist,
Schneiden eines oder mehrerer Dissektate aus der Probe,

wobei, wenn das nächste zu schneidende Dissektat sich außerhalb eines vorbestimmten Sammelradius der Sammelhaftvorrichtung befindet, die folgenden Schritte durchgeführt werden:

Anheben der Sammelhaftvorrichtung,
Verfahren des Trägers an eine bestimmte Position relativ zur optischen Achse des Mikroskops, um die Mitte des nächsten zu schneidenden Dissektats von der optischen Achse des Mikroskops zu dezentrieren,
Absenken der Sammelhaftvorrichtung auf die Probe, und
Schneiden eines oder mehrerer nächster Dissektate,

wobei nach jedem Anheben die vorbestimmte Position von sämtlichen zuvor bestimmten Positionen um mindestens einen vorbestimmten Abstand entfernt ist.

2.   Verfahren zum Schneiden und Sammeln von Dissektaten, mit den folgenden Schritten:

Aufbringen einer Probe auf einen Träger eines Laser-Dissektions-Mikroskops, der in seiner Ebene verfahrbar ist, Schneiden der Dissektate aus der Probe, und
Sammeln der Dissektate durch Absenken einer auf der optischen Achse zentrierten Sammelhaftvorrichtung auf die Probe, wobei die Sammelhaftvorrichtung im abgesenkten Zustand auf der Probe anhaftet, frei mit dem Träger verfahrbar und von der optischen Achse des Mikroskops entkoppelt ist und im angehobenen Zustand relativ zur optischen Achse festgelegt ist,

wobei, wenn ein nächstes zu sammelndes Dissektat sich außerhalb eines vorbestimmten Sammelradius der Sammelhaftvorrichtung befindet, die folgenden Schritte durchgeführt werden:

Anheben der Sammelhaftvorrichtung,
Verfahren des Trägers an eine bestimmte Position relativ zur optischen Achse des Mikroskops, um die Mitte des nächsten zu sammelnden Dissektats von der optischen Achse des Mikroskops zu dezentrieren,
Absenken der Sammelhaftvorrichtung auf die Probe, und
Anhaften eines oder mehrerer nächster Dissektate an die Sammelhaftvorrichtung,

wobei nach jedem Anheben die vorbestimmte Position von sämtlichen zuvor bestimmten Positionen um mindestens einen vorbestimmten Abstand entfernt ist.

3. Verfahren nach Anspruch 1 oder 2, wobei der vorbestimmte Abstand durch die maximale Größe der Dissektate definiert ist.

4. Verfahren nach Anspruch 1, 2 oder 3, wobei die Positionen nacheinander auf einem spiralförmigen Weg liegen.

5. Verfahren nach einem der vorangehenden Ansprüche, wobei die Sammelhaftvorrichtung im abgesenkten Zustand plan auf der Probe aufliegt.

6. Verfahren nach einem der vorangehenden Ansprüche, wobei die Sammelhaftvorrichtung im abgesenkten Zustand mit einem kontrollierten Anpressdruck auf der Probe aufliegt.

7. Laser-Dissektions-Mikroskop zum Schneiden und Sammeln von Dissektaten, umfassend
einen Träger zur Aufnahme einer bevorzugt biologischen Probe, wobei der Träger in seiner Ebene frei verfahrbar ist, eine Sammelhaftvorrichtung, die auf die Probe auf dem Träger absenkbar und davon anhebbar ist, die im abgesenkten Zustand frei mit dem Träger verfahrbar und von der optischen Achse des Mikroskops entkoppelt ist und im angehobenen Zustand relativ zur optischen Achse festgelegt ist.

8. Laser-Dissektions-Mikroskop nach Anspruch 7, ferner einen Magnet zum Steuern des Anpressdrucks der Sammelhaftvorrichtung umfassend.

9. Laser-Dissektions-Mikroskop nach Anspruch 8, wobei der Magnet frei dosierbar ist, so dass der relative Abstand der Sammelhaftvorrichtung zur Probe eingestellt werden kann.

10. Laser-Dissektions-Mikroskop nach Anspruch 7, 8 oder 9, wobei der Abstand zwischen Sammelhaftvorrichtung und Probe einstellbar ist.

11. Laser-Dissektions-Mikroskop nach einem der Ansprüche 7 bis 10, weiter mehrere Sammelhaftvorrichtungen oder ein Sammelhaftvorrichtungs-Array umfassend.

# Fig. 1a

# Fig. 1b

# Fig. 2a

# Fig. 2b

# Fig. 2c

# Fig. 3

START

S100 — NEUES CAP

NEIN

JA

FESTLEGEN G; D = (0;0) — S101

S115 — NEUEN MULTICAP EINLEGEN

S112 — D = (0;0)

FAHRE ZU P - D — S102

CAP SENKEN — S103

FAHRE ZU P; SCHN. — S104

IP - DI > S — S105

NEIN

JA

S114 — CAPLIFT NIMMT NÄCHSTES CAP

S111 — CAP HEBEN; NEUES CAP

IDI + S > CC — S106

JA

S108 — CAP HEBEN; D = G(Zx,Zy)

NEIN

NEIN

LETZTES DISSEKTAT DER GRUPPE — S107

NEIN

NEIN

JA

MULTICAP VOLL — S113

JA

S110 — MULTI CAP

NEIN

LETZTE GRUPPE — S109

JA

ENDE

JA

# Fig. 4

EP 1 887 340 A1

**Europäisches Patentamt**

**EUROPÄISCHER RECHERCHENBERICHT**

Nummer der Anmeldung

EP 06 01 6816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/33190 A2 (ARCTURUS ENGINEERING INC [US]; BAER THOMAS M [US]; HAGEN NORBERT [US];) 10. Mai 2001 (2001-05-10) <br> * Seite 22, Zeile 4 - Seite 23, Zeile 10 * <br> * Abbildungen 1-5 * <br> ----- | 7 | INV. <br> G01N1/28 |
| X | US 2006/087643 A1 (DONOVAN BRIAN W [US] ET AL) 27. April 2006 (2006-04-27) <br> * Absatz [0051] - Absatz [0053] * <br> * Absatz [0064] - Absatz [0065] * <br> * Abbildungen 2,3A * <br> ----- | 7 | |
| A | WO 99/00658 A (US HEALTH [US]) 7. Januar 1999 (1999-01-07) <br> * Seite 6, Zeile 35 - Seite 7, Zeile 32 * <br> * Seite 20, Zeile 6 - Zeile 26 * <br> * Abbildungen 1,3-5E * <br> ----- | 1-11 | |
| A | US 2006/139621 A1 (BAER THOMAS M [US] ET AL) 29. Juni 2006 (2006-06-29) <br> * das ganze Dokument * <br> ----- | 1-11 | **RECHERCHIERTE SACHGEBIETE (IPC)** |
| A | WO 98/35216 A (ARCTURUS ENGINEERING INC [US]; BAER THOMAS M [US]; ENRIGHT MARK A [US]) 13. August 1998 (1998-08-13) <br> * das ganze Dokument * <br> ----- | 1-11 | G01N |

Der vorliegende Recherchenbericht wurde für alle Patentansprüche erstellt

| Recherchenort | Abschlußdatum der Recherche | Prüfer |
|---|---|---|
| München | 9. Januar 2007 | Timonen, Tuomo |

**ANHANG ZUM EUROPÄISCHEN RECHERCHENBERICHT**
**ÜBER DIE EUROPÄISCHE PATENTANMELDUNG NR.**

EP 06 01 6816

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2007

| Im Recherchenbericht angeführtes Patentdokument | Datum der Veröffentlichung | Mitglied(er) der Patentfamilie | Datum der Veröffentlichung |
|---|---|---|---|
| WO 0133190 A2 | 10-05-2001 | AU 2922701 A | 14-05-2001 |
| US 2006087643 A1 | 27-04-2006 | KEINE | |
| WO 9900658 A | 07-01-1999 | AT 235681 T | 15-04-2003 |
| | | AU 744131 B2 | 14-02-2002 |
| | | AU 8170498 A | 19-01-1999 |
| | | CA 2294353 A1 | 07-01-1999 |
| | | DE 69812625 D1 | 30-04-2003 |
| | | DE 69812625 T2 | 25-03-2004 |
| | | EP 0991929 A1 | 12-04-2000 |
| | | JP 2002503345 T | 29-01-2002 |
| | | US 6783734 B1 | 31-08-2004 |
| | | US 6100051 A | 08-08-2000 |
| US 2006139621 A1 | 29-06-2006 | KEINE | |
| WO 9835216 A | 13-08-1998 | AT 239215 T | 15-05-2003 |
| | | AU 6150398 A | 26-08-1998 |
| | | CA 2279992 A1 | 13-08-1998 |
| | | DE 69814041 D1 | 05-06-2003 |
| | | DE 69814041 T2 | 22-01-2004 |
| | | EP 0958491 A1 | 24-11-1999 |
| | | JP 3786711 B2 | 14-06-2006 |
| | | JP 2001526795 T | 18-12-2001 |
| | | US 2001001574 A1 | 24-05-2001 |
| | | US 6184973 B1 | 06-02-2001 |
| | | US 6215550 B1 | 10-04-2001 |
| | | US 2002154288 A1 | 24-10-2002 |
| | | US 2002001074 A1 | 03-01-2002 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 20100866 U
- US 5998129 A